# EUROPEAN PATENT APPLICATION

(11) **EP 4 488 891 A1**
(43) Date of publication of application: **08.01.2025**
(21) Application number: 24172168.7
(22) Date of filing: 24.04.2024
(51) Int. Cl.: G06N 20/00, G06N 7/01, G06Q 40/03

(54) **METHOD AND SYSTEM FOR DETERMINING LOCAL FAIRNESS OF ML MODEL WITH DEGREE OF FAIRNESS**

(30) Priority: 31.05.2023 IN 202321037601
(71) Applicant: Tata Consultancy Services Limited, Maharashtra (IN)
(72) Inventor: BANSAL, Krishna Kumar, 110001 Delhi (IN); BALAJI, Ramesh, 600113 Tamil Nadu (IN); PAUL, Bivek Benoy, 682042 Kochi (IN); PURUSHOTHAMAN, Anirudh Thenguvila, 682042 Kochi (IN); KASIVISWANATHAN, Selva Sarmila, 682042 Kochi (IN); VENKATACHARI, Srinivasa Raghavan, 600113 Tamil Nadu (IN)
(74) Representative: Goddar, Heinz J.

(57) **Abstract**

State of the art model fairness approaches do not address the degree of local fairness of a ML model. A method and system for determining local fairness of a classification Machine Learning (ML) model with degree of fairness is disclosed. The method creates multiple perturb instances using multilevel GMM clustering approach and a constrained perturbation technique to ensure feature distribution of perturbed data, generated from a tabular base data is within the feature distribution of the tabular base data of the ML model. Further, the class of a protected attribute is flipped, black box model prediction probabilities and the cosine similarity constraint and multiplication factor on the probabilities is used to provide a degree of fairness for the local instance. Thus, provides magnitude of fairness or unfairness to the local instance.

## Description

### CROSS-REFERENCE TO RELATED APPLICATIONS AND PRIORITY

The present application claims priority to Indian application no. 202321037601, filed on May 31, 2023.

### TECHNICAL FIELD

The embodiments herein generally relate to the field of Machine Learning (ML) and, more particularly, to a method and system for determining local fairness of ML model with degree of fairness.

### BACKGROUND

Machine Learning (ML) models have limitations in multiple aspects such as Fairness, Accuracy, Causality, Explainability, and Trust. ML fairness is a recently established area of machine learning that studies how to ensure that biases in the data and model inaccuracies do not lead to models that treat individuals unfavorably on the basis of characteristics such as e.g., race, gender, disabilities, and sexual or political orientation. Knowing whether the ML model is fair or not is important while complying with certain regulatory requirements.

However, most of the work in literature deals with global fairness of a model. Global fairness provides information about whether a model is unfair or biased towards a group but does not provide insights on fairness of the ML model for every individual prediction. Global fairness is for a group of people. It does not reveal information regarding discrimination against an individual. Local fairness provides insight into discrimination for each individual. Consider an example of a loan applicant, where a loan application by a female gets rejected by the loan approval system of a bank. The applicant would be interested to know whether the system decision is fair or not influenced, say by gender of the loan applicant. Global fairness analysis cannot provide such induvial insights. It can only provide overall behavior of the ML model.

A work in literature discusses localization-based test generation for individual fairness testing. However, the focus of the work is on generating perturbed or synthetic data for test generation, which uses computationally heavy and time consuming approaches that identify regions in feature space for perturbation. These approaches do not address perturbations based on local instance, which is critical to generate synthetic data having feature distribution in vicinity of local instance of interest when fairness of the ML model has to be judged for precited local instance.

Another existing work provides an approach for verifying individual fairness in ML models. However, generation of synthetic data for testing the fairness is not model agnostic and requires the input from a domain expert to define thresholds for each dataset, to perform the perturbations. Thus, the above approach needs to be updated based on domain dataset.

Mere indication of model being fair is not sufficient in building trust on the ML model. Degree of fairness, if known by a user consuming the output of the ML model, can be a critical factor in building trust on the predictions of the ML model. Some existing approaches refer to fairness metrics that are associated with bias mitigation and explaining the bias and not on degree of fairness of the prediction made by the ML model.

### SUMMARY

Embodiments of the present disclosure present technological improvements as solutions to one or more of the above-mentioned technical problems recognized by the inventors in conventional systems.

For example, in one embodiment, a method for local fairness detection of Machine Learning (ML) models is provided. The method includes determining a first set of optimum clusters within a tabular base data using Gaussian Mixture Model (GMM) technique. The tabular base data associated with a Machine Learning (ML) model comprises a protected attribute, a plurality of categorical features and a plurality of continuous features. Further, the method includes determining a first cluster among the first set of optimum clusters to which a local instance of the ML model belongs to, based on the plurality of categorical features and the plurality of continuous features associated with the local instance. Further, the method includes generating a subset of the tabular base data comprising i) the local instance, and ii) a perturbed dataset obtained by perturbing the tabular base data associated with the first cluster. The boundaries of perturbation are obtained using a constrained perturbation technique, wherein the protected attribute in the subset is flipped from an unprivileged group to a privileged group. Furthermore, the method includes determining a second set of optimum clusters by clustering the subset using the GMM technique to identify a second cluster among the second set of optimum clusters that comprises the local instance. Further, the method includes selecting data points within the perturbed dataset that fall within the second cluster, wherein the local instance is excluded from the selected datapoints of the second cluster. Further, the method includes obtaining a class, and a probability of i) the selected datapoints, and ii) the local instance. Furthermore, the method includes determining a local fairness of the ML model with a degree of fairness by: (a) computing an individual similarity score for each of the selected datapoints by determining a cosine similarity between the probability of the local instance with the probability of each of the selected datapoints, wherein a value of the individual similarity score is i) positive if the class of the local instance maps to the class of a selected datapoint from among the selected datapoints, and ii) negative if the class of the local instance varies from the class of the selected datapoint; and (b) obtaining an average similarity score by averaging the individual similarity score of each of the selected datapoints. The ML model decision is fair if the average similarity score is greater than zero, wherein a value of the average similarity score indicates the degree of fairness, and unfair if the average similarity score is equal to or less than zero, wherein the value of the average similarity score indicates a degree of unfairness.

In another aspect, a system for local fairness detection of Machine Learning (ML) models is provided. The system comprises a memory storing instructions; one or more Input/Output (I/O) interfaces; and one or more hardware processors coupled to the memory via the one or more I/O interfaces, wherein the one or more hardware processors are configured by the instructions to determine a first set of optimum clusters within a tabular base data using Gaussian Mixture Model (GMM) technique. The tabular base data associated with a Machine Learning (ML) model comprises a protected attribute, a plurality of categorical features and a plurality of continuous features. Further, the one or more hardware processors are configured to determine a first cluster among the first set of optimum clusters to which a local instance of the ML model belongs to, based on the plurality of categorical features and the plurality of continuous features associated with the local instance. Further, the one or more hardware processors are configured to generate a subset of the tabular base data comprising i) the local instance, and ii) a perturbed dataset obtained by perturbing the tabular base data associated with the first cluster. The boundaries of perturbation are obtained using a constrained perturbation technique, wherein the protected attribute in the subset is flipped from an unprivileged group to a privileged group. Furthermore, the method includes determining a second set of optimum clusters by clustering the subset using the GMM technique to identify a second cluster among the second set of optimum clusters that comprises the local instance. Further, the one or more hardware processors are configured to select data points within the perturbed dataset that fall within the second cluster, wherein the local instance is excluded from the selected datapoints of the second cluster. Further, the one or more hardware processors are configured to obtain a class, and a probability of i) the selected datapoints, and ii) the local instance. Furthermore, the one or more hardware processors are configured to determine a local fairness of the ML model with a degree of fairness by: (a) computing an individual similarity score for each of the selected datapoints by determining a cosine similarity between the probability of the local instance with the probability of each of the selected datapoints, wherein a value of the individual similarity score is i) positive if the class of the local instance maps to the class of a selected datapoint from among the selected datapoints, and ii) negative if the class of the local instance varies from the class of the selected datapoint; and (b) obtaining an average similarity score by averaging the individual similarity score of each of the selected datapoints. The ML model decision is fair if the average similarity score is greater than zero, wherein a value of the average similarity score indicates the degree of fairness, and unfair if the average similarity score is equal to or less than zero, wherein the value of the average similarity score indicates a degree of unfairness.

In yet another aspect, there are provided one or more non-transitory machine-readable information storage mediums comprising one or more instructions, which when executed by one or more hardware processors causes a method for local fairness detection of Machine Learning (ML) models. The method includes determining a first set of optimum clusters within a tabular base data using Gaussian Mixture Model (GMM) technique. The tabular base data associated with a Machine Learning (ML) model comprises a protected attribute, a plurality of categorical features and a plurality of continuous features. Further, the method includes determining a first cluster among the first set of optimum clusters to which a local instance of the ML model belongs to, based on the plurality of categorical features and the plurality of continuous features associated with the local instance. Further, the method includes generating a subset of the tabular base data comprising i) the local instance, and ii) a perturbed dataset obtained by perturbing the tabular base data associated with the first cluster. The boundaries of perturbation are obtained using a constrained perturbation technique, wherein the protected attribute in the subset is flipped from an unprivileged group to a privileged group. Furthermore, the method includes determining a second set of optimum clusters by clustering the subset using the GMM technique to identify a second cluster among the second set of optimum clusters that comprises the local instance. Further, the method includes selecting data points within the perturbed dataset that fall within the second cluster, wherein the local instance is excluded from the selected datapoints of the second cluster. Further, the method includes obtaining a class, and a probability of i) the selected datapoints, and ii) the local instance. Furthermore, the method includes determining a local fairness of the ML model with a degree of fairness by: (a) computing an individual similarity score for each of the selected datapoints by determining a cosine similarity between the probability of the local instance with the probability of each of the selected datapoints, wherein a value of the individual similarity score is i) positive if the class of the local instance maps to the class of a selected datapoint from among the selected datapoints, and ii) negative if the class of the local instance varies from the class of the selected datapoint; and (b) obtaining an average similarity score by averaging the individual similarity score of each of the selected datapoints. The ML model decision is fair if the average similarity score is greater than zero, wherein a value of the average similarity score indicates the degree of fairness, and unfair if the average similarity score is equal to or less than zero, wherein the value of the average similarity score indicates a degree of unfairness.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for determining local fairness of ML model with degree of fairness, in accordance with some embodiments of the present disclosure.
FIG. 1B illustrates an process overview of the system of FIG. 1A, in accordance with some embodiments of the present disclosure.
FIGS. 2A through 2B (collectively referred as FIG. 2) is a flow diagram illustrating a method for determining local fairness of ML model with degree of fairness, using the system depicted in FIG. 1A and 1B, in accordance with some embodiments of the present disclosure.
FIG. 3A and 3B depict the degree of local fairness of the ML model for various public datasets, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

To address the problem of local fairness of Machine Learning (ML) model specifically for tabular dataset, preliminaries well known by persons having ordinary skill in the art are stated below.

A tabular dataset has features and a label. Features are a combination of continuous and categorical values. For fairness-unfairness (biasness) analysis, features can be classified as continuous, categorical, and protected attributes. The label indicates the output of the ML model. The protected attribute indicates that this feature may cause unfairness or bias in the ML model while predicting the output and members of this feature should be treated equally. For example, in a Bank loan dataset features total income, education, dependents etc., are continuous features, while `married', gender, credit history etc., are categorical features. From among these features, one or other features may affect the fairness of the ML model and are identified as protected attributes. Further, for the Bank loan dataset, the label refers to two classes, loan approved or not approved.

Fairness mean the ML model should not discriminate a group of people based on Gender, race etc. It should treat each equally. For example, male and female share the common feature values, differs with Gender only. If a loan get rejected by the ML model because of only gender difference, then the Model is unfair or biased to that value of the feature (certain group of people), and the feature is termed as protected attribute. Listed below are terminologies used in the domain of ML model fairness:

Favorable output: ML model output that is beneficial to an individual. For example, in the Bank loan data, ` Loan Approval' is favorable output.

Protected attribute: Feature of data that causes bias in ML model output. For example, in the Bank loan data Gender is a protected attribute.

Privilege Group: A group of people that hold the advantage. For example, in the Bank loan data, 'Male' is identified as privilege group.

Un-privilege Group: A group of people that hold the disadvantage. For example, in the Bank loan data, ` Female' is identified as un-privilege group.

Tabular base data also referred to as test data: As well known in the ML domain, tabular base data herein refers to a subset data that is used to evaluate the performance of a trained ML model. Herein, only feature values of the test data are required and the ground truth of the test data is not needed.

Local instance: As well known in the ML domain, local instance herein refers to any input data point of a ML model, which may be from real word scenario or from the tabular base data associated with the ML model.

Embodiments of the present disclosure provide a method and system for determining local fairness of a Machine Learning (ML) model with degree of fairness. For determining fairness of the ML model, which is a pretrained classification model, the method disclosed creates multiple perturb instances using multilevel GMM clustering approach and a constrained perturbation technique, which restricts feature distribution of perturbed data, generated from a tabular base data within the feature distribution of the tabular base data of the ML model, and in proximity of a local instance. The tabular base data refers to test data associated with the pretrained ML model and comprises a plurality of categorical, a plurality of continuous features (columns) and a protected attribute belonging to either a privileged group or an unprivileged group.

The constrained perturbation technique automatically generates the constraints based on data distribution within an automatically identified data space of the tabular base data around the local instance. Further, with the class of a protected attribute flipped, the method uses the black box model or ML model prediction probabilities and the cosine similarity constraint and multiplication factor on the probabilities to produce a degree of fairness for the local instance. The degree of fairness provides magnitude of fairness or unfairness to the local instance. A positive score indicates the ML model is being fair for the given local instance, and a negative score indicates the ML model being unfair or biased to the given local instance.

The constrained perturbation approach used herein based on Applicant's Indian Patent Application No 202321014240, titled LOCAL EXPLANATION OF BLACK BOX MODEL BASED ON CONSTRAINED PERTURBATION AND ENSEMBLE-BASED SURROGATE MODEL, filed on 2 March 2023. Thus, it can be understood that explanation of constrained perturbation is herein discussed briefly and can be referred to above application for further details. However, appropriate modifications are made to the constrained perturbation technique described in the applicants patent application above to suit the requirements of perturbed data generation for the ML model fairness identification disclosed herein.

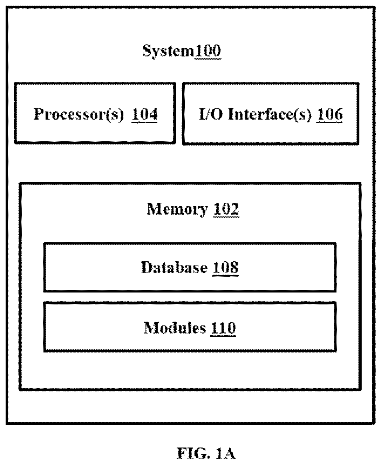

Referring now to the drawings, and more particularly to FIGS. 1A through 3B, where similar reference characters denote corresponding features consistently throughout the figures, there are shown preferred embodiments and these embodiments are described in the context of the following exemplary system and/or method.

FIG. 1A is a functional block diagram of a system 100 for determining local fairness of ML model with degree of fairness, in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 110 such as the ML model (not shown), a clustering module (not shown) implementing a GMM technique for clustering data with optimum clusters, a scoring module (not shown) for determining average similarity score to estimate degree of fairness or degree of biasness of the ML model and so on. The ML model herein can be any classification model such as Support Vector Machine (SVM), Random Forest and the like. The ML model is pretrained using a training dataset.

Further, the plurality of modules 110 include programs or coded instructions that supplement applications or functions performed by the system 100 for executing different steps involved in the process of determining degree of fairness of the ML model, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can further include various sub-modules (not shown).

Further, the memory 102 may comprise information pertaining to input(s)/output(s) of each step performed by the processor(s) 104 of the system 100 and methods of the present disclosure. For example, first set of optimum clusters, second set of optimum clusters, the local instance, class and probability of predictions of the ML model and the like. Further, the memory 102 includes a database 108. The database (or repository) 108 may include a plurality of abstracted pieces of code for refinement and data that is processed, received, or generated as a result of the execution of the plurality of modules in the module(s) 110. The database 108 can further include the tabular base data. The tabular base data comprises the plurality of categorical, the plurality of continuous features (columns) and the protected attribute belonging to either the privileged group or the unprivileged group.

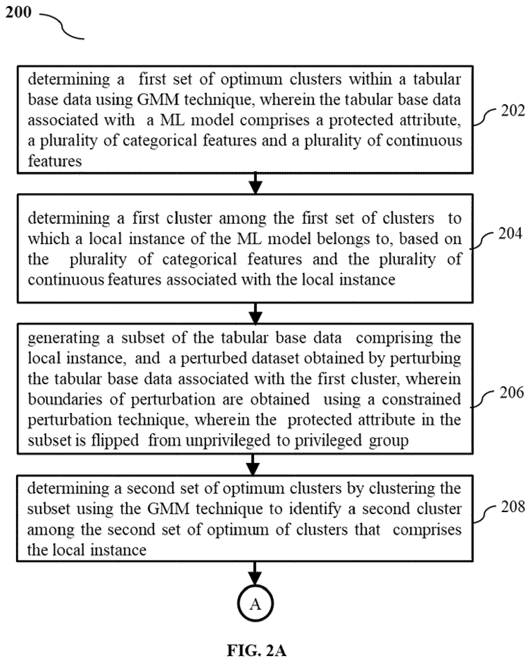

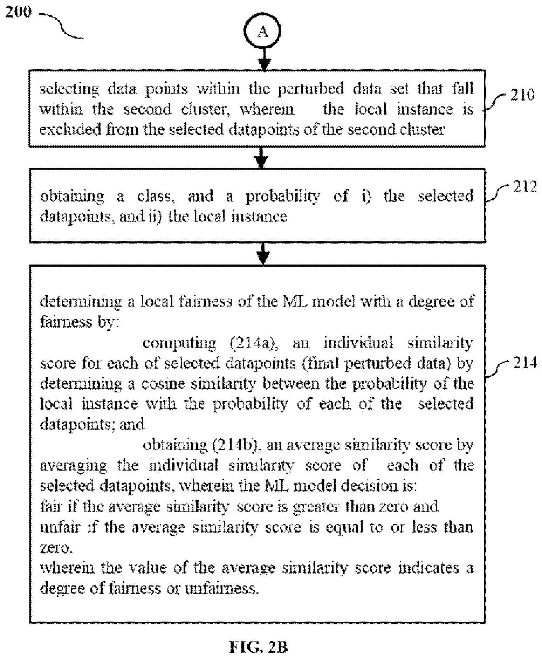

Although the database 108 is shown internal to the system 100, it will be noted that, in alternate embodiments, the database 108 can also be implemented external to the system 100, and communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 2 through FIG. 3B.

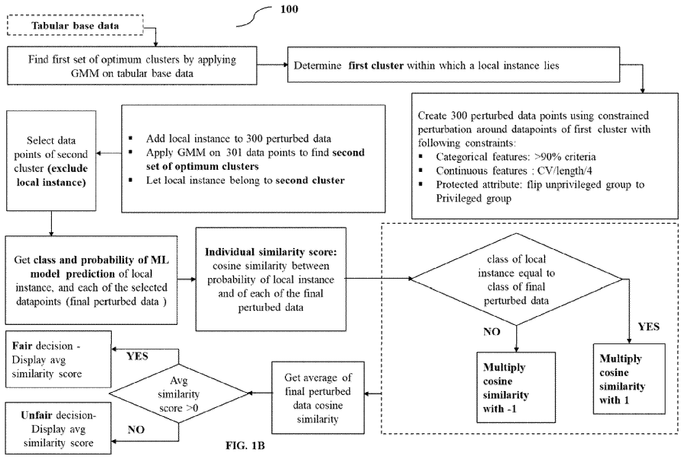

FIGS. 2A through 2B (collectively referred as FIG. 2) is a flow diagram illustrating a method 200 for determining local fairness of ML model with degree of fairness, using the system depicted in FIG. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

The method 200 depicts steps to determine the degree of fairness or biasness of the ML model for the predictions for the local instance or a given input instance. Referring to the steps of the process overview of the system 100 in FIG. 1B and the method 200, at step 202 of the method 200, the one or more hardware processors 104 are configured by the instructions to determine the first set of optimum clusters within the tabular base data using the GMM technique using the clustering module. As known in the art the GMM technique trains a plurality of GMMs using a first local maxima of a Silhouette score technique to identify main clusters as optimum clusters. The GMM approach enables more accurate clustering of datapoints lying on cluster boundaries. The tabular base data, as explained earlier comprises the plurality of categorical features, the plurality of continuous features, and the protected attribute predefined for the type of dataset. For example, the Bank loan dataset based on the study defines `gender' as a protected attribute. The clustering enables segregating the datapoints of the tabular base data in accordance with the feature distribution.

At step 204 of the method 200, the one or more hardware processors 104 are configured by the instructions to determine a first cluster among the first set of optimum clusters to which a local instance of the ML model belongs to, based on the plurality of categorical features and the plurality of continuous features of the local instance. This enables identifying datapoints of the tabular base data lying closer to the local instance for generating perturbations.

At step 206 of the method 200, the one or more hardware processors 104 are configured by the instructions to generate a subset of the tabular base data. The subset comprises: i) the local instance, and ii) a perturbed dataset obtained by perturbing the tabular base data associated with the first cluster. The boundaries of perturbation are obtained using a constrained perturbation technique, wherein the protected attribute in the subset is flipped from an unprivileged group to a privileged group. By using an approach of selecting the first cluster that includes the local instance, the method disclosed ensures that perturbed dataset or synthetic dataset, so generated from variations to datapoints of the first cluster that are the closest to the local instance as compared to other datapoints of the tabular base data.

The constrained perturbation technique to generate variations to the data points of the first cluster is based on Applicant's Indian Patent Application No 202321014240, titled LOCAL EXPLANATION OF BLACK BOX MODEL BASED ON CONSTRAINED PERTURBATION AND ENSEMBLE-BASED SURROGATE MODEL, filed on 2 March 2023, and is briefly described below to avoid repetition of the applicants' filed patent application.
a) Create perturbations to each of the plurality of continuous features of the first cluster constrained by Coefficient of Variation (CV) score of each feature of the plurality of continuous features derived from feature distribution of a percentage of sample data selected from the first cluster. The CV score is obtained using a equation CV/length/4, wherein the CV is coefficient of variation of features values corresponding to a column of a continuous feature, length is the length of the sample data, 4 is an experimentally derived constant.
b) Create perturbations to each of the plurality of categorical features of the first cluster by random sampling from set of feature values of the sample data selected from the first cluster such that it covers 90% of the percentage of sample data.

The method disclosed herein ensures constraints on the perturbations retain the feature distribution of generated the perturbed dataset (synthetic dataset) closely follow features of the local instance. As depicted in FIG. 1B, in an example implementation, 300 perturbed data points are created using constrained perturbation around datapoints of first cluster and by flipping the protected attribute from the unprivileged group to the privileged group.

At step 208 of the method 200, the one or more hardware processors 104 are configured by the instructions to determine a second set of optimum clusters, using the clustering module, by clustering the subset using the GMM technique to identify a second cluster among the second set of optimum of clusters that comprises the local instance. Thus, in one implementation, the local instance (features associated with input instance) is added to 300 perturbed data and the GMM technique is applied on 301 data points to find second set of optimum clusters. The second level clustering using the GMM technique to identify the second cluster that includes the local instance ensures that data points from within the perturbed dataset that lie in proximity to the local instance are only selected for further ML model fairness determination.

At step 210 of the method 200, the one or more hardware processors 104 are configured by the instructions to select data points within the perturbed dataset that fall within the second cluster by excluding the local instance. The selected datapoints are also referred to as final perturbed data.

At step 212 of the method 200, the one or more hardware processors 104 are configured by the instructions to obtain a class and a probability of i) the selected datapoints, and ii) the local instance.

At step 214 of the method 200, the one or more hardware processors 104 are configured by the instructions to determine the local fairness of the ML model with the degree of fairness. The steps include:
a) Computing an individual similarity score, using the scoring module, for each of the selected datapoints by determining a cosine similarity between the probability of the local instance with the probability of each of the selected datapoints (final perturbed data). The value of the individual similarity score is i) positive if the class of the local instance maps to the class of a selected datapoint from among the selected datapoints, and ii) negative if the class of the local instance varies from the class of the selected datapoint.
   The concept applied by the method 200 disclosed herein for determining individual similarity scores is explained below: Local fairness (intended output of the ML model) expects that the ML model output should not vary by changing or flipping the protected attribute value (say male to female). Output of a ML model is for an instance is probability score. It can be represented as a vector. Thus, a vector for the local instance and output of the ML model for each of the selected datapoints of the perturbed dataset is generated. A cosine angle similarity *cos θ* between the local instance and the perturbed instance is computed. The method takes probability score as vector local instance probability is [0.65 0.35]. Let perturbed data probability is [0.2 0.8]. Perturbed data point that have counterfactual class must have angle >90 w.r.t local instance.
   Herein, the probability score is viewed as a vector. For a fair model prediction: vectors of local instance and perturbed data points should be in same direction. For a biased model prediction cosine angle should be greater than 90 degree. Probability score is a non-negative value. So, cosine angle between two vectors (having non-negative value) is always between 0 degree and 90 degree. As per our requirements for a biased decision, perturbation probability vector and local instance probability vector should be in different direction i.e., cosine similarity has negative value. To achieve this our work multiplies cosine similarity score with -1 where local instance class and perturbed data point class is different.
      1) If 90> *θ* >0, then vectors are in same direction (indicating an intended/fair ML model output, which does not change if protected attribute is flipped). Thus, ML model decision is unbiased or fair, for that particular output/predicted instance of a datapoint from the selected data point, when angle falls within the 90 to 0 degree bracket and hence scoring is assigned a positive sign.
      2) If 90<*θ*<270, then vectors are not in same direction (indicating an unintended/unfair ML model output, which tends to change if protected attribute is flipped and is discriminant). Thus, decision is biased, for that individual output instance, when angle does not fall within the 90 to 0 degree bracket, and scoring is assigned a negative sign.
b) Once individual scores are obtained for output instances of all the selected datapoints, an average similarity score is obtained by averaging the individual similarity score of each of the selected datapoints (final perturbed data). The ML model decision is fair if the average similarity score is greater than zero, wherein a value of the average similarity score indicates the degree of fairness. The ML model decision is unfair if the average similarity score is equal to or less than zero, wherein the value of the average similarity score indicates a degree of unfairness or degree of biasness.

The derived analysis of the ML model for the local fairness along with the average similarity score indicating the degree of fairness or unfairness can be notified to an user or consumer of the output of the ML model on his/her end device. The user may then derive further insights for the ML model.

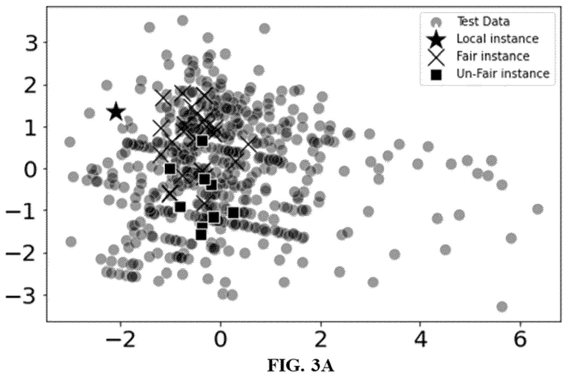

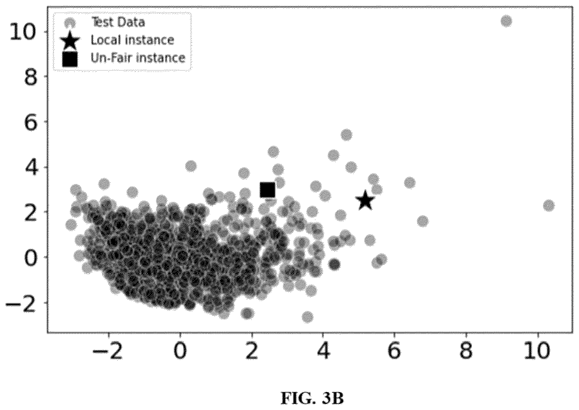

FIG. 3A and 3B depict the degree of local fairness of the ML model for various public datasets..

FIG. 3A depicts output of system 100 for following considerations for Bank loan dataset.
i) Model prediction for instance : loan rejection
ii) Let Gender is protected attribute
iii) Privilege group : Male : 1
iv) Unprivileged group : Female : 0
v) Favorable output: 1 (loan approved)
**vi) Output: Fair Decision**
**vii) Score** : **0.47**

'Gender' is a well know feature as a protected attribute. During experimentation, the system 100 assumes `male' as privilege group 'female' as unprivileged group, favorable output is loan approval. For this instance, gender is female and model output is loan rejected. The system 100 is used to determine whether decision made by the ML model is fair or not and depth of fairness/biasness in the decision. FIG. 3A shows the visualization of perturbation data and its class. Test data (black dots), local instance (Big Black star) and perturbed data point (Black cross and black square).

Perturbed data points are similar to the local instance but having different feature value of Gender (Male). Average cosine similarity score from our work is 0.47. Positive value of average cosine similarity shows Fair decision i.e., changing protected attribute value from female to male does not change the model output.

FIG. 3B depicts output of system 100 for following considerations for Compas dataset.
i) Model prediction for instance : Criminal
ii) Let Race is protected attribute
iii) Privilege group : Caucasian : 1
iv) Unprivileged group : African : 0
v) Favorable output: 0 (No Criminal)
**vi) Output: Un-Fair Decision**
**vii) Score** : **0.08**

Race feature has 6 values 'Other' 'African-American' 'Caucasian' 'Hispanic' 'Native American' 'Asian'. instance that has 'African-American' as race, model predicts it as criminal. Experiment is conducted for a `local instance' for which race is 'African-American' and model prediction observed is criminal. Privileged group is 'Caucasian' and unprivileged group is `African-American.' To investigate the local fairness for this decision of a pretrained ML model based on the compass dataset is selected, and the system 100 provides the ML model fairness for the local instance.

FIG. 3B shows the distribution of test data (black data) of compass dataset, local instance as Black star and perturbed data points in black square. All perturbed data is of black square. i.e., perturbed data point is of different class from local instance. This indicates the discrimination or bias in the decision. Average cosine similarity score is -0.08. Here negative sign shows the biased decision with bias score of 0.08 (degree of unfairness). It can be concluded that for a given instance: If the race of instance is replaced from `African-American' to 'Caucasian', model prediction changes from 'Criminal' to 'no-criminal'

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method for (200) local fairness detection, the method comprising:
determining (202), by one or more hardware processors, a first set of optimum clusters within a tabular base data using Gaussian Mixture Model (GMM) technique, wherein the tabular base data associated with a Machine Learning (ML) model comprises a protected attribute, a plurality of categorical features and a plurality of continuous features;
determining (204), by the one or more hardware processors, a first cluster among the first set of optimum clusters to which a local instance of the ML model belongs to, based on the plurality of categorical features and the plurality of continuous features associated with the local instance;
generating (206), by the one or more hardware processors, a subset of the tabular base data comprising i) the local instance, and ii) a perturbed dataset obtained by perturbing the tabular base data associated with the first cluster, wherein boundaries of perturbation are obtained using a constrained perturbation technique, wherein the protected attribute in the subset is flipped from an unprivileged group to a privileged group;
determining (208), by the one or more hardware processors, a second set of optimum clusters by clustering the subset using the GMM technique to identify a second cluster among the second set of optimum of clusters comprising the local instance;
selecting (210), by the one or more hardware processors, data points within the perturbed dataset that fall within the second cluster, wherein the local instance is excluded from the selected datapoints of the second cluster;
obtaining (212), by the one or more hardware processors, a class, and a probability of i) the selected datapoints, and ii) the local instance; and
determining (214), by the one or more hardware processors, a local fairness of the ML model with a degree of fairness by:
computing (214a), an individual similarity score for each of the selected datapoints by determining a cosine similarity between the probability of the local instance with the probability of each of the selected datapoints, wherein a value of the individual similarity score is i) positive if the class of the local instance maps to the class of a selected datapoint from among the selected datapoints, and ii) negative if the class of the local instance varies from the class of the selected datapoint; and
obtaining (214b), an average similarity score by averaging the individual similarity score of each of the selected datapoints, wherein the ML model decision is:
fair if the average similarity score is greater than zero, wherein a value of the average similarity score indicates the degree of fairness, and
unfair if the average similarity score is equal to or less than zero, wherein the value of the average similarity score indicates a degree of unfairness.

2. The processor implemented method as claimed in claim 1, wherein the constrained perturbation technique,
creates perturbations to each of the plurality of continuous features of the first cluster constrained by Coefficient of Variation (CV) score of each feature of the plurality of continuous features derived from feature distribution of a percentage of sample data selected from the first cluster, and
creates perturbations to each of the plurality of categorical features of the first cluster by random sampling from set of feature values of the sample data selected from the first cluster such that it covers 90% of the percentage of sample data.

3. The processor implemented method as claimed in claim 1, wherein a feature distribution of the perturbed dataset lies within the feature distribution of the first cluster and in proximity to the local instance.

4. The processor implemented method as claimed in claim 1, wherein a feature distribution of the second cluster is in proximity to the feature distribution of the local instance.

5. The processor implemented method as claimed in claim 1, wherein the GMM technique trains a plurality of GMMs using a first local maxima of a Silhouette score technique to identify main clusters as optimum clusters

6. The processor implemented method as claimed in claim 1, wherein the ML model is a pretrained classification model.

7. A system (100) for local fairness detection, the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
determine a first set of optimum clusters within a tabular base data using Gaussian Mixture Model (GMM) technique, wherein the tabular base data associated with a Machine Learning (ML) model comprises a protected attribute, a plurality of categorical features and a plurality of continuous features;
determine a first cluster among the first set of optimum clusters to which a local instance of the ML model belongs to, based on the plurality of categorical features and the plurality of continuous features associated with the local instance;
generate a subset of the tabular base data comprising i) the local instance, and ii) a perturbed dataset obtained by perturbing the tabular base data associated with the first cluster, wherein boundaries of perturbation are obtained using a constrained perturbation technique, wherein the protected attribute in the subset is flipped from an unprivileged group to a privileged group;
determine a second set of optimum clusters by clustering the subset using the GMM technique to identify a second cluster among the second set of optimum of clusters comprising the local instance;
select data points within the perturbed dataset that fall within the second cluster, wherein the local instance is excluded from the selected datapoints of the second cluster;
obtain a class, and a probability of i) the selected datapoints, and ii) the local instance; and
determine a local fairness of the ML model with a degree of fairness by:
computing an individual similarity score for each of the selected datapoints by determining a cosine similarity between the probability of the local instance with the probability of each of the selected datapoints, wherein a value of the individual similarity score is i) positive if the class of the local instance maps to the class of a selected datapoint from among the selected datapoints, and ii) negative if the class of the local instance varies from the class of the selected datapoint; and
obtaining an average similarity score by averaging the individual similarity score of each of the selected datapoints, wherein the ML model decision is:
fair if the average similarity score is greater than zero, wherein a value of the average similarity score indicates the degree of fairness, and
unfair if the average similarity score is equal to or less than zero, wherein the value of the average similarity score indicates a degree of unfairness.

8. The system as claimed in claim 7, wherein the constrained perturbation technique,
creates perturbations to each of the plurality of continuous features of the first cluster constrained by Coefficient of Variation (CV) score of each feature of the plurality of continuous features derived from feature distribution of a percentage of sample data selected from the first cluster, and
creates perturbations to each of the plurality of categorical features of the first cluster by random sampling from set of feature values of the sample data selected from the first cluster such that it covers 90% of the percentage of sample data.

9. The system as claimed in claim 7, wherein a feature distribution of the perturbed dataset lies within the feature distribution of the first cluster and in proximity to the local instance.

10. The system as claimed in claim 7, wherein a feature distribution of the second cluster is in proximity to the feature distribution of the local instance.

11. The system as claimed in claim 7, wherein the GMM technique trains a plurality of GMMs using a first local maxima of a Silhouette score technique to identify main clusters as optimum clusters.

12. The system as claimed in claim 7, wherein the ML model is a pretrained classification model.

13. One or more non-transitory machine-readable information storage mediums comprising one or more instructions which when executed by one or more hardware processors cause:
determining, a first set of optimum clusters within a tabular base data using Gaussian Mixture Model (GMM) technique, wherein the tabular base data associated with a Machine Learning (ML) model comprises a protected attribute, a plurality of categorical features and a plurality of continuous features;
determining, a first cluster among the first set of optimum clusters to which a local instance of the ML model belongs to, based on the plurality of categorical features and the plurality of continuous features associated with the local instance;
generating, a subset of the tabular base data comprising i) the local instance, and ii) a perturbed dataset obtained by perturbing the tabular base data associated with the first cluster, wherein boundaries of perturbation are obtained using a constrained perturbation technique, wherein the protected attribute in the subset is flipped from an unprivileged group to a privileged group;
determining, a second set of optimum clusters by clustering the subset using the GMM technique to identify a second cluster among the second set of optimum of clusters comprising the local instance;
selecting, data points within the perturbed dataset that fall within the second cluster, wherein the local instance is excluded from the selected datapoints of the second cluster;
obtaining, a class, and a probability of i) the selected datapoints, and ii) the local instance; and
determining, a local fairness of the ML model with a degree of fairness by:
computing, an individual similarity score for each of the selected datapoints by determining a cosine similarity between the probability of the local instance with the probability of each of the selected datapoints, wherein a value of the individual similarity score is i) positive if the class of the local instance maps to the class of a selected datapoint from among the selected datapoints, and ii) negative if the class of the local instance varies from the class of the selected datapoint; and
obtaining, an average similarity score by averaging the individual similarity score of each of the selected datapoints, wherein the ML model decision is:
fair if the average similarity score is greater than zero, wherein a value of the average similarity score indicates the degree of fairness, and
unfair if the average similarity score is equal to or less than zero, wherein the value of the average similarity score indicates a degree of unfairness.

14. The one or more non-transitory machine-readable information storage mediums of claim 13,
wherein a feature distribution of the perturbed dataset lies within the feature distribution of the first cluster and in proximity to the local instance, and
wherein a feature distribution of the second cluster is in proximity to the feature distribution of the local instance.

15. The one or more non-transitory machine-readable information storage mediums of claim 13, wherein the GMM technique trains a plurality of GMMs using a first local maxima of a Silhouette score technique to identify main clusters as optimum clusters.
